# DEMANDE DE BREVET EUROPEEN

(11) **EP 4 656 680 A1**
(43) Date de publication de la demande: **03.12.2025**
(21) Numéro de dépôt: 25178263.7
(22) Date de dépôt: 22.05.2025
(51) Int. Cl.: C08L 23/12, C08K 3/013

(54) **COMPOSITION POLYMÉRIQUE THERMOPLASTIQUE, SON PROCÉDÉ DE PRÉPARATION ET DISPOSITIF AMORTISSANT DES VIBRATIONS L INCORPORANT**

(30) Priorité: 22.05.2024 FR 2405230
(71) Demandeur: HUTCHINSON, 75008 Paris (FR)
(72) Inventeur: SYLVESTRE, Nathan, 45200 MONTARGIS (FR); FALZON, Marie-France, 45000 ORLEANS (FR); COSTA, Christopher, 45200 MONTARGIS (FR); GUILLAUME, Thomas, 45200 MONTARGIS (FR); GIFFARD, Antoine, 45120 CEPOY (FR)
(74) Mandataire: Plasseraud IP

(57) **Abrégé**

L'invention concerne une composition polymérique thermoplastique à base d'au moins un polymère du propylène, et un dispositif pour véhicule à moteur en particulier électrique, apte à amortir des vibrations à des fréquences de 1-3000 Hz et à des températures moyennes de 10-50° C.

La composition (I1, I2) comprend, en fractions massiques :
50-91 % d'une matrice polymérique non élastomère, la matrice étant à base d'au moins un polymère du propylène choisi parmi les homopolymères et copolymères du propylène,
8-45 % d'une charge renforçante comprenant une charge fibreuse, et
1-18 % (par exemple 2-18%) d'un système plastifiant comprenant au moins une résine hydrocarbonée aliphatique, alicyclique ou aromatique présentant une température de transition vitreuse Tg égale ou supérieure à 20° C, de préférence, ladite au moins une résine hydrocarbonée est aliphatique ou alicyclique et présente une température de transition vitreuse Tg inclusivement comprise entre 25 et 50° C.

## Description

### Domaine technique

L'invention concerne une composition polymérique thermoplastique à base d'au moins un polymère du propylène, et un dispositif pour véhicule à moteur en particulier électrique apte à amortir des vibrations à des fréquences de 1-3000 Hz et à des températures moyennes de 10-50° C. L'invention s'applique notamment à toute pièce structurelle transmettant des vibrations et à tout support antivibratoire d'un véhicule automobile électrique (e.g. des étriers, des supports-moteur et des supports de compresseurs de climatisation, à titre non limitatif), et également de tout autre véhicule par exemple aérien ou spatial, dans tout ou partie des plages de fréquences et de températures moyennes précitées.

### Technique antérieure

De manière connue, les corps d'étriers de freins et les bras de support-moteur pour véhicules automobiles sont réalisés en un matériau métallique par exemple à base d'aluminium ou de magnésium. Ces pièces structurelles métalliques présentent en général des propriétés mécaniques satisfaisantes, mais l'inconvénient d'être relativement lourdes et de procurer un faible amortissement des vibrations en roulage, notamment à une fréquence allant de 1 à 3000 Hz et à une température inférieure ou égale à 90° C.

EP 3 831 885 A1 au nom de la Demanderesse concerne une composition polymérique thermoplastique comprenant des polyamides, comprenant un polyamide aliphatique (PA), un polyphtalamide (PPA), et une charge renforçante comprenant des fibres de verre. La composition présente, après conditionnement humide « RH50 », des valeurs de tan delta selon ISO 6721-5 maximales entre 60-90° C et 1-3000 Hz.

Un inconvénient des compositions polymériques thermoplastiques actuellement sur le marché à base de polyamides renforcées par des fibres de verre est qu'elles ne présentent pas de caractéristiques d'amortissement satisfaisantes entre 1 et 3000 Hz à des températures inférieures à 50° C, conditions qui caractérisent les pièces structurelles transmettant des vibrations et les supports antivibratoires dans des véhicules automobiles électriques.

US 2022/195250 A1 concerne un matériau d'amortissement et une feuille amortissante fabriquée à partir de celui-ci, par exemple dans l'industrie automobile ou les appareils électriques. Le matériau d'amortissement comprend en poids : 10-50 % d'un élastomère copolymère à blocs, tel qu'un élastomère à blocs styrène, 5-40 % d'une fibre de longueur spécifique, par exemple de verre ou de carbone, 5-45 % d'un polymère thermoplastique non élastomère, tel qu'un PE, PS ou PLA, 5-50 % d'un agent tackifiant, telle qu'une résine de coupe C5, C9 ou terpénique, 0-50 % d'une charge inorganique, telle que du mica ou du talc, et 0-30 % d'un agent ignifugeant.

Un inconvénient majeur de la composition polymérique thermoplastique présentée dans US 2022/195250 A1 réside dans l'utilisation dans sa matrice polymérique d'une quantité élevée d'élastomère thermoplastique à blocs styrène en plus du polymère thermoplastique non élastomère, du fait que cet élastomère thermoplastique présente une température de transition vitreuse Tg très basse générant des problèmes d'utilisation à température ambiante et est en outre susceptible de générer des problèmes de mélangeage avec un polymère thermoplastique oléfinique.

### Exposé de l'invention

Un but de l'invention est de proposer une composition polymérique thermoplastique à hautes performances mécaniques et antivibratoires qui remédie notamment aux inconvénients précités en présentant des propriétés mécaniques satisfaisantes et un amortissement amélioré aux fréquences et températures caractérisant les sollicitations appliquées à une pièce structurelle transmettant des vibrations ou à un support antivibratoire dans un véhicule automobile électrique, notamment.

Ce but est atteint en ce que la Demanderesse vient de découvrir de manière inattendue au cours de ses recherches que, si l'on combine à une charge renforçante fibreuse une matrice polymérique non élastomère qui comprend un polymère du propylène et une résine plastifiante hydrocarbonée de Tg égale ou supérieure à 20° C, alors on peut obtenir, par rapport à une composition témoin constituée d'un polyamide aliphatique (e.g. PA 6) renforcé par des fibres de verre, un amortissement quantifié par un facteur de perte (mesuré par analyse mécanique dynamique tant à sec qu'après un conditionnement en atmosphère humide de type RH50) qui est nettement amélioré aux fréquences de 1-3000 Hz et à des températures moyennes de 10-50° C, et des propriétés mécaniques statiques (mesurées tant à 23° C qu'à 60° C) qui sont globalement conservées.

Ainsi, une composition polymérique thermoplastique selon l'invention est apte à amortir des vibrations à des fréquences de 1-3000 Hz et des températures moyennes de 10-50° C, et elle comprend, en fractions massiques:
50-91 % d'une matrice polymérique non élastomère, la matrice étant à base d'au moins un polymère du propylène choisi parmi les homopolymères et copolymères du propylène,
8-45 % d'une charge renforçante comprenant une charge fibreuse, et
1-18 % (par exemple 2-18%) d'un système plastifiant comprenant au moins une résine hydrocarbonée aliphatique, alicyclique ou aromatique présentant une température de transition vitreuse Tg égale ou supérieure à 20° C, de préférence, ladite au moins une résine hydrocarbonée est aliphatique ou alicyclique et présente une température de transition vitreuse Tg inclusivement comprise entre 25 et 50° C.

On notera qu'une composition ainsi définie est utilisable pour former tout ou partie d'un dispositif amortisseur de vibrations pour véhicule automobile à moteur électrique, tel qu'une pièce structurelle transmettant des vibrations ou un support antivibratoire amortissant des vibrations entre deux éléments rigides et en supportant une charge (e.g. support de liaison reliant le moteur à la caisse du véhicule), en remplacement partiel ou total des pièces métalliques utilisées de manière conventionnelle pour un tel dispositif qui présentent un poids élevé et un amortissement des vibrations insuffisant aux fréquences et températures précitées.

### Description détaillée

### Matrice polymérique non élastomère

Par l'expression « à base de », on entend dans la présente description que la matrice comprend majoritairement en poids le constituant concerné, i.e. selon une fraction massique supérieure à 50 %, de préférence égale ou supérieure à 75 % et pouvant aller jusqu'à 100 %.

Par « matrice polymérique non élastomère », on entend ici qu'une composition selon l'invention est totalement dépourvue d'élastomère, i.e. est exempte de tout élastomère thermoplastique et de tout caoutchouc. Ainsi, la matrice polymérique d'une composition selon l'invention peut être constituée d'un ou de plusieurs polymères thermoplastiques non élastomères.

Selon une autre caractéristique générale de l'invention, ledit au moins un polymère du propylène peut être compris dans ladite matrice selon une fraction massique dans la matrice de 75-100 % et peut être :
- un homopolymère vierge du propylène choisi parmi les polypropylènes isotactiques,
- un interpolymère vierge du propylène et d'une alpha-oléfine autre que le propylène (e.g. le butylène ou l'hexène), par exemple un polypropylène copolymère (« PPC » pour « polypropylene copolymer » en anglais), ou
- un homopolymère ou copolymère recyclé du propylène issu d'un matériau polyoléfinique recyclé de type post-industriel (PIR) ou post-consommation (PCR).

Selon un premier exemple de réalisation de l'invention pouvant compléter la caractéristique précédente, ladite matrice est constituée dudit au moins un polymère du propylène, étant de préférence constituée dudit homopolymère vierge du propylène ou dudit homopolymère ou copolymère recyclé du propylène.

Selon un deuxième exemple de réalisation de l'invention en variante dudit premier exemple, ladite matrice comprend au moins un autre polymère thermoplastique non issu du propylène selon une fraction massique dans la matrice de 5-40 % (de préférence de 10-25 %), qui est choisi parmi :
- les polymères d'acétate de vinyle (EVA) optionnellement couplés à un agent compatibilisant,
- les poly(téréphtalate de butylène) (PBT) couplés à un agent compatibilisant, et
- les polyamides aliphatiques, notamment choisis parmi les PA 6, PA 11 et PA 12 et couplés à un agent compatibilisant,
l'agent compatibilisant, de type polymérique, comprenant par exemple un polypropylène greffé anhydride maléique.

Selon une autre caractéristique générale de l'invention, ladite matrice de la composition est dépourvue de polyphtalamide (PPA). Par « dépourvue », on entend par exemple que ladite matrice comporte moins de 0,5%, moins de 0,1%, ou moins de 0,01% de PPA, de préférence ladite matrice ne contient pas de PPA.

### Charge renforçante

Par « charge renforçante », on entend dans la présente description une ou plusieurs charge(s) individuelle(s) de grade renforçant pour ladite matrice polymérique, qui est/ sont dispersée(s) de manière homogène dans la composition.

La charge renforçante selon l'invention comprend :
- une charge fibreuse (i.e. fibrillaire), pouvant comprendre des fibres organiques ou minérales, continues ou discontinues, par exemple choisies parmi les fibres discontinues de carbone, de verre, d'aramide et leurs mélanges, et
- optionnellement en outre des charges non fibreuses, de préférence des charges inorganiques telles que des charges lamellaires ou non.

De préférence, la charge fibreuse est constituée en totalité ou en partie de fibres de verre ou de carbone discontinues.

Par « fibres de verre », on entend dans la présente description des fibres courtes de verre de longueur et diamètre respectivement de 1-8 mm et de 5-15 µm (de préférence de 2-6 mm de longueur et 8-12 µm de diamètre), qui sont pourvues d'un ensimage adapté audit au moins un polymère du propylène.

Par « charges inorganiques non fibreuses de type lamellaire », on entend dans la présente description une charge minérale présentant une structure à lamelles, par opposition aux charges inorganiques non lamellaires telles que les silices et les craies, par exemple.

Plus particulièrement, on entend ici une charge inorganique à lamelles qui présente un facteur de forme supérieur à 10, de préférence supérieur à 20, étant précisé que le « facteur de forme » (« aspect ratio » en anglais), désigne de manière connue le ratio de la dimension moyenne la plus grande (usuellement largeur ou longueur) sur la dimension moyenne la plus petite (usuellement épaisseur) caractérisant des lamelles de la charge inorganique lamellaire. Ce ratio moyen peut être mesuré par microscopie électronique à balayage (MEB).

Avantageusement, la charge inorganique lamellaire peut être choisie parmi les phyllosilicates et les talcs.

Par " phyllosilicate ", on entend de manière connue un sous-groupe du groupe des silicates, les phyllosilicates étant construits par empilement de couches tétraédriques (" T ") où les tétraèdres partagent trois sommets sur quatre (les oxygènes " basaux "), le quatrième sommet (l'oxygène " apical ") étant reliée à une couche octaédrique (" O ") occupée par des cations différents. A titre de phyllosilicates, conviennent par exemple les smectites, la kaolinite et les kaolins, les micas, les vermiculites et les montmorillonites.

Également de manière connue, on entend :
- par « kaolinite », une espèce minérale de phyllosilicate composée de silicate d'aluminium hydraté, de formule Al₂Si₂O₅(OH)₄ ;
- par « mica », un groupe minéral à l'intérieur des phyllosilicates principalement à base de silicate d'aluminium et de potassium ; et
- par « talc », une espèce minérale essentiellement composée de silicate de magnésium doublement hydroxylé de formule Mg₃Si₄O₁₀(OH)₂.

Selon une autre caractéristique générale de l'invention, la charge renforçante peut comprendre, en fractions massiques dans la composition :
8-40 % de ladite charge fibreuse, de préférence des fibres de verre ou de carbone discontinues,
0-13 % d'une charge inorganique non fibreuse de type lamellaire, par exemple choisie parmi les phyllosilicates et les talcs, et
0-12 % d'une charge inorganique non fibreuse et non lamellaire, par exemple choisie parmi les carbonates de calcium.

Selon un exemple préférentiel de réalisation de l'invention, la charge renforçante est constituée, en fractions massiques dans la composition :
de 10-35 % desdites fibres de verre ou de carbone, et
de 0-15 % de talc et/ou de craie.

### Système plastifiant

Selon une autre caractéristique générale de l'invention, le système plastifiant comprend de préférence, en fraction massique dans la composition : 1-15% (par exemple 1-5% ou 5-15 %), de ladite au moins une résine hydrocarbonée qui est spécifiquement aliphatique ou alicyclique et présente une température de transition vitreuse Tg inclusivement comprise entre 25 et 50° C, ladite au moins une résine hydrocarbonée étant par exemple une résine hydrogénée alicyclique à température de transition vitreuse Tg de 30-45° C et de masse moléculaire moyenne en nombre Mn de 480-600 g/mol .

Selon une autre caractéristique générale de l'invention pouvant compléter la précédente et définissant un premier mode de réalisation de l'invention, le système plastifiant peut comprendre en outre, en fraction massique dans la composition :
3-17 % (par exemple 5-15 %) d'au moins une autre résine hydrocarbonée aliphatique ou alicyclique présentant une température de transition vitreuse Tg inférieure ou égale à 0° C, de préférence comprenant au moins une polyoléfine amorphe de type aliphatique ou alicyclique présentant une température de transition vitreuse Tg inclusivement comprise entre -45 et -10° C et une viscosité Brookfield à l'état fondu à 190° C inclusivement comprise entre 1,0 et 4,0 Pa.s, mesurée selon la norme ASTM D 3236, ladite au moins une autre résine hydrocarbonée étant par exemple
un homopolymère amorphe du propylène ou un copolymère amorphe éthylène-propylène, ou
un mélange amorphe de polyoléfines aliphatiques, par exemple d'un homopolymère amorphe du propylène et d'un copolymère amorphe éthylène-propylène.

En variante dudit premier mode de l'invention, selon une autre caractéristique générale définissant un deuxième mode de l'invention, le système plastifiant peut comprendre en outre, en fraction massique dans la composition : 3-13 % (par exemple 5-10 %) d'au moins une autre résine hydrocarbonée spécifiquement aromatique présentant une température de transition vitreuse Tg inclusivement comprise entre 30 et 45° C, de préférence une polyoléfine aromatique choisie parmi les homopolymères et copolymères du styrène.

On mesure les températures de transition vitreuses Tg des résines hydrocarbonées du système plastifiant par exemple par la technique de calorimétrie différentielle à balayage (« DSC » pour « Differential Scanning Calorimetry » en anglais).

Selon une autre caractéristique générale de l'invention pouvant compléter l'une quelconque des caractéristiques précitées, la composition comprend de préférence, en fractions massiques :
55-90 % de ladite matrice, qui comprend ledit au moins un polymère du propylène selon une fraction massique dans ladite matrice de 75-100 %,
10-40 % de ladite charge renforçante, laquelle comprend ladite charge fibreuse selon une fraction massique dans la charge renforçante de 75-100 %, et
1-18 % dudit système plastifiant, lequel comprend ladite au moins une résine hydrocarbonée aliphatique, alicyclique ou aromatique selon une fraction massique dans le système plastifiant de 40-100 % (par exemple de 60-90 %).

Selon une autre caractéristique générale de l'invention pouvant compléter l'une quelconque des caractéristiques précitées, la composition comprend de préférence, en fractions massiques :
50-91 %, de préférence 55-90%, d'une matrice polymérique non élastomère, la matrice étant à base d'au moins un polymère du propylène choisi parmi les homopolymères et copolymères du propylène, de préférence
8-45 %, de préférence 10-40%, d'une charge renforçante comprenant une charge fibreuse, et
1-18 % d'un système plastifiant comprenant au moins une résine hydrocarbonée qui est aliphatique ou alicyclique et présente une température de transition vitreuse Tg inclusivement comprise entre 25 et 50° C, de préférence une résine hydrogénée alicyclique à température de transition vitreuse Tg de 30-45° C et de masse moléculaire moyenne en nombre Mn de 480-600 g/mol.

### Propriétés, préparation et applications de compositions selon l'invention

Selon une autre caractéristique générale de l'invention pouvant compléter l'une quelconque des caractéristiques précitées, ladite composition peut présenter, après un conditionnement dans de l'air à 50 % d'humidité relative (RH50), des valeurs de tan delta, mesurées par analyse mécanique dynamique (« DMA ») selon la norme ISO 6721-5 sur des éprouvettes rectangulaires de 34,81 mm de longueur, 4 mm de largeur et 2 mm d'épaisseur, par des balayages en fréquences allant de 0,1 Hz à 20 Hz et avec une amplitude de déformation de 15 µm, par des paliers de 5° C sur une plage de température allant de Tg - 40° C à Tg + 40° C, ces valeurs de tan delta, obtenues par le principe de superposition temps-température, étant maximales à une température comprise entre 20° C et 50° C dans une plage de fréquences allant de 1 Hz à 3000 Hz, et satisfaisant à l'une au moins des conditions (i), (ii), (iii) suivantes, pour au moins une fréquence inclusivement comprise entre 1 Hz et 3000 Hz:
(i) à 20° C : tan delta > 2,50 %, avantageusement tan delta > 4,00 %,
(ii) à 30° C : tan delta > 4,00 %, avantageusement tan delta > 5,00 %,
(iii) à 40° C : tan delta > 4,50 %, avantageusement tan delta > 6,00 %.
Les valeurs tan delta peuvent être exprimées en valeurs mesurées ou en %, il s'agit alors de la valeur mesurée multipliée par 100.

Selon une autre caractéristique générale de l'invention pouvant compléter l'une quelconque des caractéristiques précitées, la composition peut présenter, à 60° C après un conditionnement humide dans de l'air à 50 % d'humidité relative, un module d'Young mesuré selon la norme ISO 527 qui est avantageusement supérieur à 1,8 GPa, de préférence supérieur à 2, 0 GPa, préférentiellement supérieur à 2,5 GPa, et, plus préférentiellement,supérieur à 3,5 GPa.

Une composition selon l'invention peut comprendre le produit d'un mélangeage par voie fondue de ladite matrice, de ladite charge renforçante et dudit système plastifiant, de préférence par extrusion.

Un dispositif à fonction dynamique selon l'invention est adapté pour équiper un véhicule à moteur automobile, aérien ou spatial, le dispositif étant apte à amortir des vibrations dans une plage de fréquences de 1 à 3000 Hz et de températures moyennes de 10 à 50° C vues par le dispositif au sein du véhicule, le dispositif comprenant une composition telle que définie ci-dessus qui est moulée par injection et est optionnellement solidaire d'un insert métallique, par exemple fileté (l'insert métallique éventuel étant minoritaire en masse dans le dispositif par rapport à la composition moulée dont la fraction masse dans le dispositif peut ainsi varier de 80 % à 100 %, par exemple).

Avantageusement, ledit dispositif peut être apte à équiper un véhicule automobile à moteur électrique, et ce dispositif peut être choisi parmi les pièces structurelles transmettant des vibrations (e.g. pièces adaptées pour être reliées aux roues du véhicule de sorte à en recevoir les vibrations) et les supports antivibratoires réunissant des premier et deuxième éléments rigides en amortissant des vibrations entre eux et en supportant une charge, le support antivibratoire étant de préférence un support de liaison reliant le moteur à un élément de la structure du véhicule, tel qu'un longeron de sa caisse.

Ce dispositif selon l'invention est par exemple avantageusement choisi parmi des étriers, des supports de moteur et des supports de compresseurs de climatisation pour un véhicule automobile à moteur électrique.

Comme indiqué ci-dessus, un dispositif selon l'invention pourrait être utilisé dans tout autre véhicule à moteur, par exemple de type aérien ou spatial.

### Méthodes de mesure

Comme indiqué de manière générale ci-dessus et en relation avec les exemples de réalisation présentés ci-après, on a caractérisé les compositions polymériques obtenues (tant les compositions non conformes invention que les compositions selon l'invention), après un conditionnement dans de l'air à 50 % d'humidité relative (RH50), par des valeurs de tan delta mesurées par analyse mécanique dynamique (« DMA » pour « Dynamic Mechanical Analysis »).

Le conditionnement dans l'air à 50 % d'humidité relative (conditionnement RH50), qui a été utilisé avant de caractériser les compositions par « DMA », a suivi un protocole dérivé de la norme ISO 1110 et défini par la Demanderesse en mettant en œuvre les quatre étapes suivantes, pour des éprouvettes H2 :
- pesée des éprouvettes H2 après leur moulage par injection (masse à l'état sec) ;
- saturation partielle des éprouvettes H2 dans une enceinte climatique pendant 72 heures à 50° C et 95 % d'humidité, puis pesée ;
- stockage des éprouvettes H2 à 23° C et à RH50, et pesée toutes les 24 heures jusqu'à ce que leur masse se stabilise (variation de masse inférieure à 0,1 % d'un jour à l'autre); puis
- calcul du pourcentage de reprise en eau en comparant la masse de chaque éprouvette H2 stabilisée à la masse de chaque éprouvette sèche.

On a par ailleurs caractérisé à l'état sec les compositions obtenues par « DMA », étant précisé que la Demanderesse a procédé au conditionnement sec des éprouvettes H2 en mettant en œuvre les trois étapes suivantes :
- pesée des éprouvettes H2 après leur moulage par injection (masse à l'état sec),
- thermo-scellage sous vide des éprouvettes H2 afin d'éviter leur reprise en eau, et
- pesée des éprouvettes H2 avant l'analyse « DMA », pour s'assurer de leur absence de reprise en eau.

Le protocole de mesure « DMA » suivi dans la présente description pour obtenir les valeurs de tan delta (i.e. tangente δ), a utilisé un montage de type « encastrement 3 points » (« Dual Cantilever » en anglais) selon la norme ISO 6721-5 de 1996 révisée en 2019 (vibrations en flexion - méthode hors résonance), en se basant sur les principes généraux exposés dans la norme ISO 6721-1. Ce protocole de mesure met en œuvre les balayages en fréquences avec l'amplitude de déformation sur lesdites éprouvettes rectangulaires (de 34,81 mm de longueur, 4 mm de largeur et 2 mm d'épaisseur) sur ladite plage de températures par rapport à la température de transition vitreuse Tg de chaque composition obtenue. On a mesuré la Tg de chaque composition obtenue par cette même technique « DMA » à « encastrement 3 points » au moyen desdites éprouvettes rectangulaires par des balayages en température à 15 µm de déformation, à une fréquence f de 1 Hz et suivant une rampe de 3° C par minute.
On a utilisé ensuite le principe d'équivalence temps-température « TTS » (« Time-Temperature Superposition » en anglais), pour construire des courbes maîtresses couvrant la plage de fréquence d'intérêt de 1 à 3000 Hz aux températures voulues.

### Brève description des dessins

D'autres caractéristiques, avantages et détails de la présente invention ressortiront à la lecture de la description suivante de plusieurs exemples de réalisation de l'invention, donnés à titre illustratif et non limitatif en relation avec les dessins joints, parmi lesquels :
**Fig. 1**

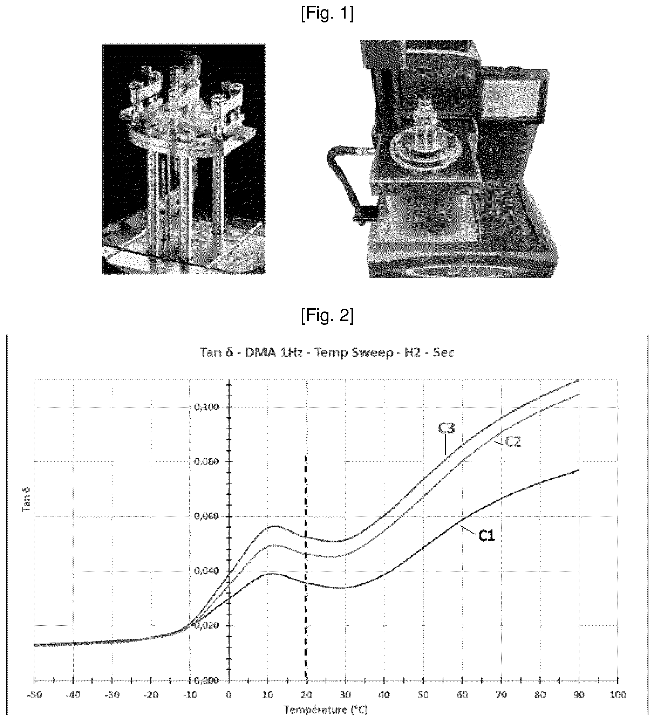

   [Fig. 1] représente deux photographies, la photographie de gauche montrant un appareil « DMA Q800 » de TA Instruments utilisée pour l'analyse mécanique dynamique (« DMA ») selon l'invention afin d'obtenir les valeurs d'amortissement (tan delta) en fonction de la fréquence, et la photographie de droite montrant un montage de type « encastrement trois points » utilisé pour cette analyse mécanique dynamique (« DMA ») en relation avec cet appareil.
**Fig. 2**
   [Fig. 2] est un graphique montrant les propriétés d'amortissement (tan delta à 1 Hz) obtenues en fonction de la température (° C) avec l'appareil et le montage de la figure 1, pour trois compositions non conformes à l'invention C1, C2, C3.
**Fig. 3**

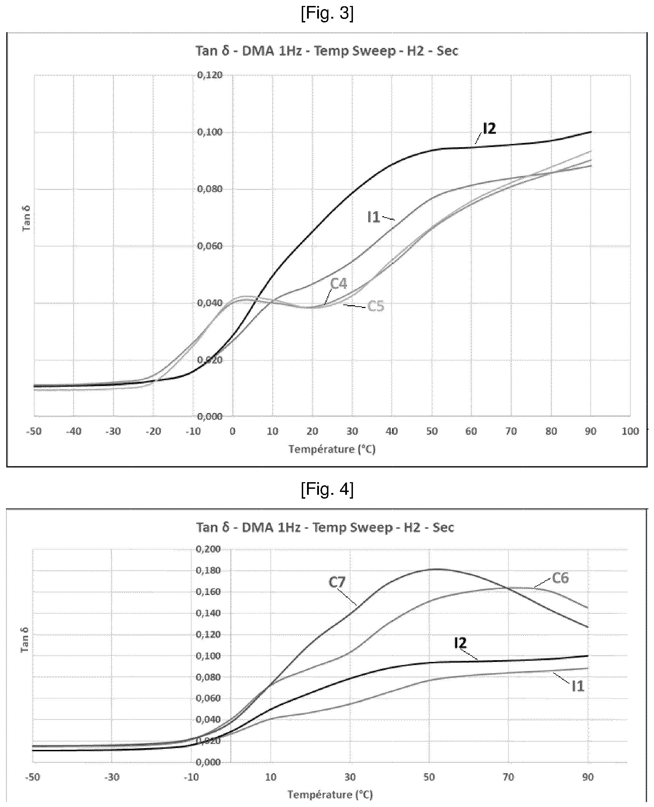

   [Fig. 3] est un graphique montrant les propriétés d'amortissement (tan delta à 1 Hz) obtenues en fonction de la température (° C) avec l'appareil et le montage de la figure 1, pour deux autres compositions non conformes à l'invention C4, C5 et pour deux compositions selon l'invention I1, I2.
**Fig. 4**
   [Fig. 4] est un graphique montrant les propriétés d'amortissement (tan delta à 1 Hz) obtenues en fonction de la température (° C) avec l'appareil et le montage de la figure 1, pour deux autres compositions non conformes à l'invention C6, C7 en comparaison des deux compositions selon l'invention 11, I2 telles que caractérisées à la figure 3.
**Fig. 5**

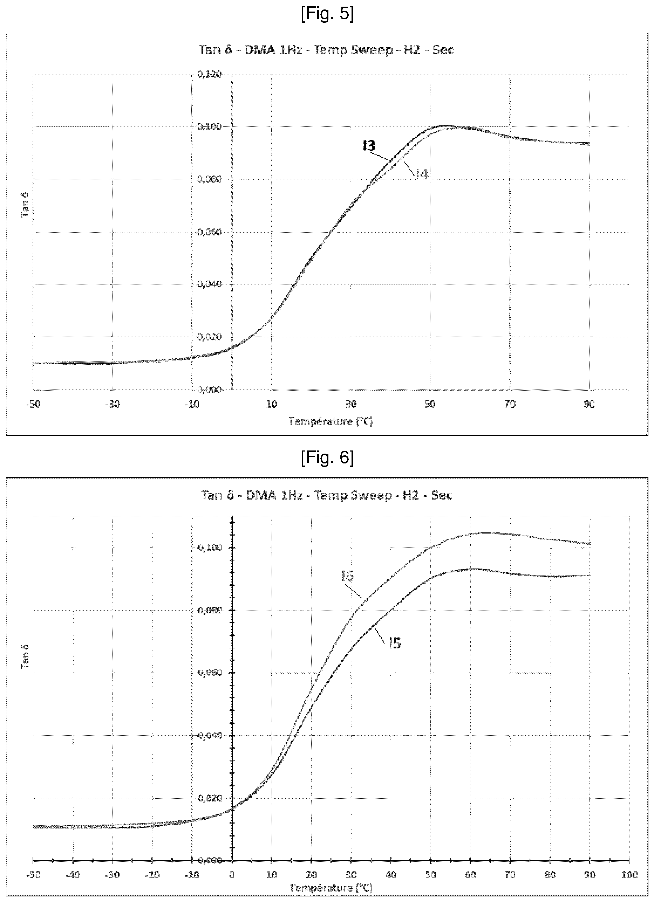

   [Fig. 5] est un graphique montrant les propriétés d'amortissement (tan delta à 1 Hz) obtenues en fonction de la température (° C) avec l'appareil et le montage de la figure 1, pour deux autres compositions selon l'invention I3, I4.
**Fig. 6**
   [Fig. 6] est un graphique montrant les propriétés d'amortissement (tan delta à 1 Hz) obtenues en fonction de la température (° C) avec l'appareil et le montage de la figure 1, pour deux autres compositions selon l'invention I5, I6.
**Fig. 7**

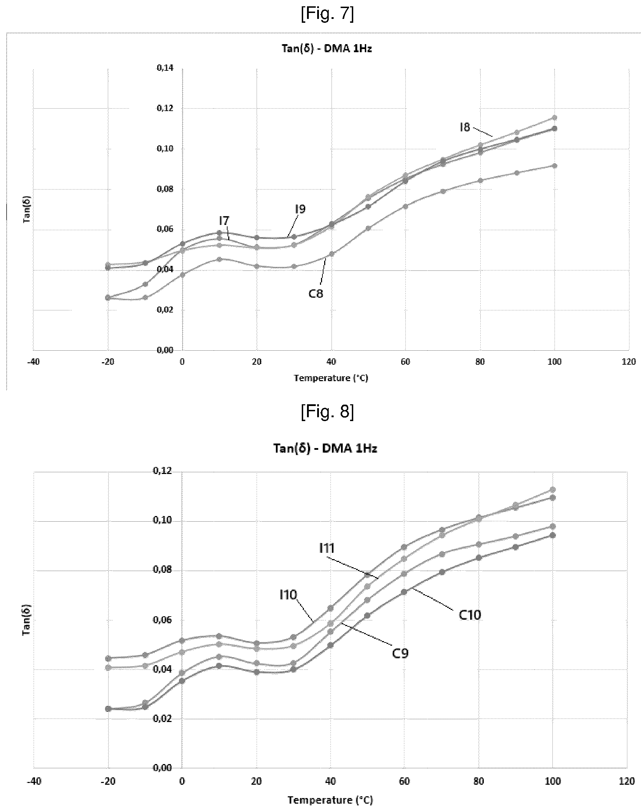

   [Fig. 7] est un graphique montrant les propriétés d'amortissement (tan delta à 1 Hz) obtenues en fonction de la température (° C) avec l'appareil et le montage de la figure 1, pour une autre composition non conforme à l'invention C8, et pour trois compositions selon l'invention I7, I8 et I9.
**Fig. 8**
   [Fig. 8] est un graphique montrant les propriétés d'amortissement (tan delta à 1 Hz) obtenues en fonction de la température (° C) avec l'appareil et le montage de la figure 1, pour deux compositions non conformes à l'invention C9 et C10, et pour deux compositions selon l'invention 110, et 111.
**Fig. 9**

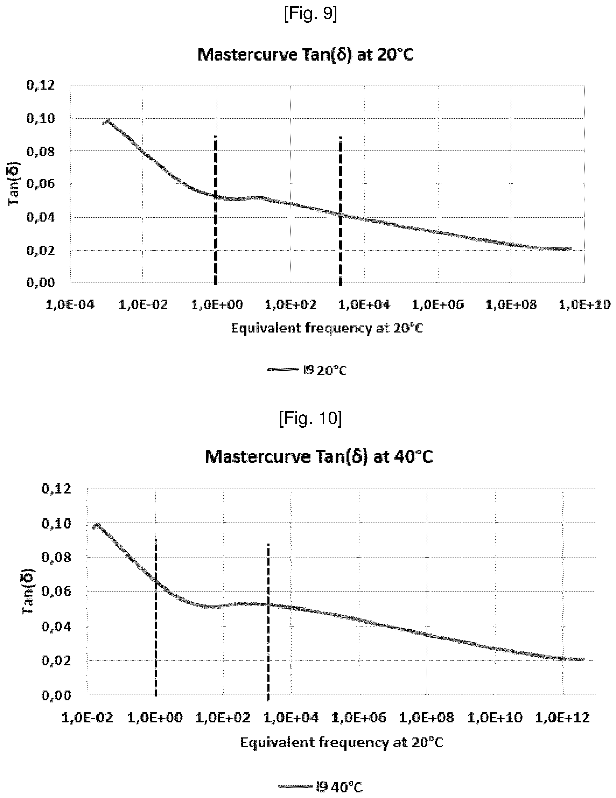

   [Fig. 9] est un graphique montrant les propriétés d'amortissement (tan delta) à 20°C obtenues en fonction de la fréquence en Hz (notamment de 1 à 3000 Hz) avec l'appareil et le montage de la figure 1, pour la composition selon l'invention I9.
**Fig. 10**
   [Fig. 10] est un graphique montrant les propriétés d'amortissement (tan delta) à 40°C obtenues en fonction de la fréquence en Hz (notamment de 1 à 3000 HZ) avec l'appareil et le montage de la figure 1, pour la composition selon l'invention I9.
**Fig. 11**

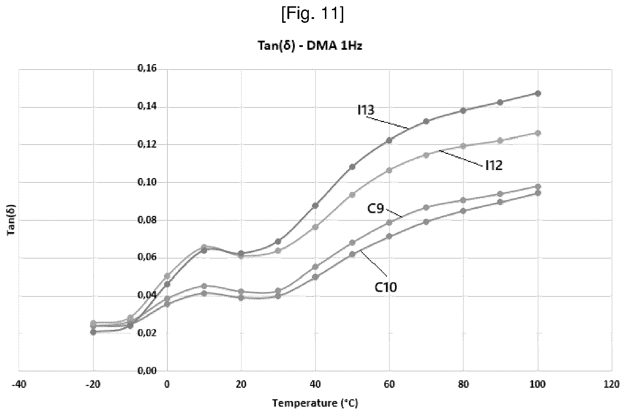

   [Fig. 11] est un graphique montrant les propriétés d'amortissement (tan delta à 1 Hz) obtenues en fonction de la température (° C) avec l'appareil et le montage de la figure 1, pour deux compositions non conformes à l'invention C9 et C10, et pour deux compositions selon l'invention 112, et 113.

### Exemples de réalisation de l'invention

Dans tous les exemples suivants, on a préparé par voie fondue les compositions non conformes à l'invention C1-C10, ainsi que les compositions selon l'invention I1-I13, par extrusion dans une extrudeuse bi-vis « Leistritz » ZSE40MAXX (ratio longueur L / diamètre D = 40), puis l'on a moulé par injection les compositions obtenues via une presse verticale « Engel 400t ».

### Formulations des compositions C1-C7 et I1-I6 et ingrédients utilisés

Le tableau 1 ci-après indique les formulations (fractions massiques des ingrédients dans chaque composition en %), paramètres d'extrusion, d'injection et les propriétés des compositions C1-C3.

**[Tableau 1]**

| **Ingrédients** | | **C1** | **C2** | **C3** |
|---|---|---|---|---|
| Polypropylène vierge | PPH 3060 (Total) | 70 | 65 | 60 |
| Copolymère EVA | Vinavil 5603P | 0 | 5 | 10 |
| Fibres de verre | DS 2200-10P | 30 | 30 | 30 |

| **Paramètres d'extrusion** | | **C1** | **C2** | **C3** |
|---|---|---|---|---|
| Température matière en sortie en (° C) | | 194 | 196 | 194 |
| Puissance (%) | | 71 | 60 | 55 |
| Vitesse de la vis (tours/min.) | | 150 | 150 | 150 |
| Débit total (kg/h) | | 15 | 15 | 15 |
| Nombre de trous de la filière | | 2 | 2 | 2 |
| Pression en sortie (10⁵ Pa) | | 52 | 47 | 43 |

| **Paramètres d'injection** | | **C1** | **C2** | **C3** |
|---|---|---|---|---|
| Température moule (° C) | | 60 | 60 | 60 |
| Pression d'injection commutation (10⁵ Pa) | | 1048 | 1014 | 987 |
| Pression de maintien (10⁵ Pa) | | 500 | 500 | 500 |
| Temps de maintien (s) | | 7 | 7 | 7 |
| Temps de refroidissement (s) | | 15 | 15 | 15 |

| **Propriétés** | | **C1** | **C2** | **C3** |
|---|---|---|---|---|
| Tg (DMA) (° C) | | 11 | 12 | 12 |
| Tan delta à 20° C et à 1 Hz | | 0,036 | 0,046 | 0,052 |
| **Module d'Young à 23° C (GPa)** | | **6494** | **5135** | **4816** |
| Ecart-type | | 272 | 177 | 195 |
| **Module d'Young à 60° C (GPa)** | | **4135** | **3271** | **3033** |
| Ecart-type | | 382 | 252 | 124 |

Comme visible au graphique de la figure 2, l'ajout, dans la matrice polymérique renforcée par des fibres de verre, de 5 % et 10 % en poids d'un copolymère éthylène-acétate de vinyle (EVA de Tg = -3° C) au polypropylène, confère aux compositions C2 et C3 une amélioration significative de l'amortissement dans la plage de température 20-50° C en comparaison de la composition C1, mais ces compositions C2-C3 présentent des propriétés mécaniques très insuffisantes.

Le tableau 2 ci-après indique les formulations (fractions massiques des ingrédients dans chaque composition en %), paramètres d'extrusion, d'injection et les propriétés des compositions C4, C5 et I1, I2.

**[Tableau 2]**

| **Ingrédients** | | **C4** | **C5** | **I1** | **I2** |
|---|---|---|---|---|---|
| Polypropylène vierge | PPH 3060 (Total) | 65 | 60 | 65 | 60 |
| Plastifiant polypropylène amorphe (Tg < 0° C) | Regalflex P1023 | 5 | 10 | 0 | 0 |
| Plastifiant alicyclique (Tg > 20° C) | Regalite R1090 | 0 | 0 | 5 | 10 |
| Fibres de verre | DS 2200-10P | 30 | 30 | 30 | 30 |

| **Paramètres d'extrusion** | | **C4** | **C5** | **I1** | **I2** |
|---|---|---|---|---|---|
| Température matière en sortie en (° C) | | 193 | 188 | 203 | 190 |
| Puissance (%) | | 65->70 | 59->65 | 71 | 63 |
| Vitesse de la vis (tours/min.) | | 150 | 150 | 150 | 150 |
| Débit total (kg/h) | | 15 | 15 | 15 | 15 |
| Nombre de trous de la filière | | 3 | 3 | 3 | 3 |
| Pression en sortie (10⁵ Pa) | | 50 | 46->50 | 53 | 49 |

| **Paramètres d'injection** | | **C4** | **C5** | **I1** | **I2** |
|---|---|---|---|---|---|
| Température moule (° C) | | 30 | 30 | 30 | 30 |
| Pression d'injection commutation (10⁵ Pa) | | 863 | 833 | 912,5 | 939 |
| Pression de maintien (10⁵ Pa) | | 700 | 610 | 700 | 700 |
| Temps de maintien (s) | | 10 | 10 | 10 | 10 |
| Temps de refroidissement (s) | | 20 | 20 | 20 | 20 |

| **Propriétés** | | **C4** | **C5** | **I1** | **I2** |
|---|---|---|---|---|---|
| Tg (DMA) (° C) | | 4 | 4 | 70 | 52 |
| Tan delta à 20° C et à 1 Hz | | 0,039 | 0,038 | 0,047 | 0,065 |
| **Module d'Young à 23° C (GPa)** | | **5259** | **5346** | **6069** | **5655** |
| Ecart-type | | 275 | 325 | 370 | 284 |
| **Module d'Young à 60° C (GPa)** | | **3603** | **3293** | **3696** | **3303** |
| Ecart-type | | 286 | 241 | 323 | 216 |

Comme visible à la figure 3, l'ajout, à la matrice de polypropylène, renforcée par des fibres de verre, de 5 % et 10 % en poids d'un plastifiant selon l'invention (résine alicyclique Regalite R1090 de Tg sensiblement égale à 36° C) confère aux compositions I1 et I2 une amélioration significative de l'amortissement dans la plage 20-50° C, ainsi que des propriétés mécaniques améliorées, en comparaison des compositions C4-C5 dont le plastifiant unique n'est pas selon l'invention (résine aliphatique Regalflex : homopolymère de propylène amorphe de Tg sensiblement égale à -10° C et de viscosité Brookfield à 190° C égale à 2,3 Pa.s).

Le tableau 3 ci-après indique les formulations (fractions massiques des ingrédients dans chaque composition en %), paramètres d'extrusion, d'injection et les propriétés des compositions I1, I2 et C6, C7.

**[Tableau 3]**

| **Ingrédients** | | **I1** | **I2** | **C6** | **C7** |
|---|---|---|---|---|---|
| Polypropylène vierge | PPH 3060 (Total) | 65 | 60 | 95 | 90 |
| Plastifiant alicyclique (Tg > 20° C) | Regalite R1090 | 5 | 10 | 5 | 10 |
| Fibres de verre | DS 2200-10P | 30 | 30 | 0 | 0 |

| **Paramètres d'extrusion** | | **I1** | **I2** | **C6** | **C7** |
|---|---|---|---|---|---|
| Température matière en sortie en (° C) | | 203 | 190 | 189 | 200 |
| Puissance (%) | | 71 | 63 | 70 | 62 |
| Vitesse de la vis (tours/min.) | | 150 | 150 | 150 | 150 |
| Débit total (kg/h) | | 15 | 15 | 15 | 15 |
| Nombre de trous de la filière | | 3 | 3 | 3 | 3 |
| Pression en sortie (10⁵ Pa) | | 53 | 49 | 44 | 42 |

| **Paramètres d'injection** | | **I1** | **I2** | **C6** | **C7** |
|---|---|---|---|---|---|
| Température moule (° C) | | 30 | 30 | 30 | 30 |
| Pression d'injection commutation (10⁵ Pa) | | 912,5 | 939 | 749 | 739 |
| Pression de maintien (10⁵ Pa) | | 700 | 700 | 450 | 450 |
| Temps de maintien (s) | | 10 | 10 | 10 | 10 |
| Temps de refroidissement (s) | | 20 | 20 | 20 | 20 |

| **Propriétés** | | **I1** | **I2** | **C6** | **C7** |
|---|---|---|---|---|---|
| Tg (DMA) (° C) | | 70 | 52 | 72 | 52 |
| Tan delta à 20° C et à 1 Hz | | 0,047 | 0,065 | 0,088 | 0,111 |
| **Module d'Young à 23° C (GPa)** | | **6069** | **5655** | **1312** | **1065** |
| Ecart-type | | 370 | 284 | 70 | 40 |
| **Module d'Young à 60° C (GPa)** | | **3696** | **3303** | **495** | **434** |
| Ecart-type | | 323 | 216 | 138 | 39 |

Comme visible au tableau 3 et à la figure 4, le renforcement par une charge fibreuse (e.g. fibres de verre) de la matrice de polypropylène additionnée de 5 % et 10 % en poids d'un plastifiant selon l'invention (résine alicyclique Regalite R1090), même s'il réduit l'amortissement des compositions I1, I2 dans la plage 20-50° C par rapport aux compositions C6, C7 dépourvue de charge fibreuse, confère à ces compositions 11, I2 une tenue mécanique satisfaisante (notamment en termes de module d'Young, tant à 23° C qu'à 60° C à RH50) en comparaison des compositions C6, C7 dont la tenue mécanique est rédhibitoire.

Le tableau 4 ci-après indique les formulations (fractions massiques des ingrédients dans chaque composition en %), paramètres d'extrusion, d'injection et les propriétés des compositions I3 et I4.

**[Tableau 4]**

| **Ingrédients** | | **I3** | **I4** |
|---|---|---|---|
| Polypropylène vierge | PPH 3060 (Total) | 60 | 0 |
| Polypropylène recyclé (PCR 70 %) | rPP 1002 (Ineos) | 0 | 60 |
| **Plastifiant** alicyclique (Tg > 20° C) | Regalite R1090 | 10 | 10 |
| Fibres de verre | DS 2200-10P | 30 | 30 |

| **Paramètres d'extrusion** | | **I3** | **I4** |
|---|---|---|---|
| Température matière en sortie en (° C) | | 195 | 193 |
| Puissance (%) | | 56 | 51 |
| Vitesse de la vis (tours/min.) | | 150 | 150 |
| Débit total (kg/h) | | 15 | 15 |
| Nombre de trous de la filière | | 2 | 2 |
| Pression en sortie (10⁵ Pa) | | 45 | 41 |

| **Paramètres d'injection** | | **I3** | **I4** |
|---|---|---|---|
| Température moule (° C) | | 30 | 30 |
| Pression d'injection commutation (10⁵ Pa) | | 886 | 785 |
| Pression de maintien (10⁵ Pa) | | 500 | 500 |
| Temps de maintien (s) | | 10 | 10 |
| Temps de refroidissement (s) | | 20 | 20 |

| **Propriétés** | | **I3** | **I4** |
|---|---|---|---|
| Tg (DMA) (° C) | | 53 | 58 |
| Tan delta à 20° C et à 1 Hz | | 0,050 | 0,049 |
| **Module d'Young à 23° C (GPa)** | | **5399** | **5686** |
| Ecart-type | | 353 | 254 |
| **Module d'Young à 60° C (GPa)** | | **2327** | **2508** |
| Ecart-type | | 34 | 119 |

Comme visible à la figure 5, l'utilisation, dans la matrice renforcée par une charge fibreuse et additionnée d'un plastifiant selon l'invention (résine alicyclique Regalite R1090), de polypropylène vierge (PP) et de polypropylène recyclé (rPP) confère globalement les mêmes propriétés avantageuses d'amortissement dans la plage 20-50° C et une tenue mécanique similaire aux compositions I3 et I4 (les modules d'Young mesurés de la composition I4 à base d'un rPP sont toutefois supérieurs à ceux de la composition I3 à base d'un PP).

Le tableau 5 ci-après indique les formulations (fractions massiques des ingrédients dans chaque composition en %), paramètres d'extrusion, d'injection et les propriétés des compositions I5 et I6.

**[Tableau 5]**

| **Ingrédients** | | **I5** | **I6** |
|---|---|---|---|
| Polypropylène vierge | PPH 3060 (Total) | 60 | 55 |
| Plastifiant alicyclique (Tg > 20° C) | Regalite R1090 | 10 | 10 |
| Craie | Omya BSH | 0 | 5 |
| Fibres de verre | DS 2200-10P | 30 | 30 |

| **Paramètres d'extrusion** | | **I5** | **I6** |
|---|---|---|---|
| Température matière en sortie en (° C) | | 194 | 194 |
| Puissance (%) | | 54 | 53 |
| Vitesse de la vis (tours/min.) | | 150 | 150 |
| Débit total (kg/h) | | 15 | 15 |
| Nombre de trous de la filière | | 2 | 2 |
| Pression en sortie (10⁵ Pa) | | 42 | 43 |

| **Paramètres d'injection** | | **I5** | **I6** |
|---|---|---|---|
| Température moule (° C) | | 60 | 60 |
| Pression d'injection commutation (10⁵ Pa) | | 863 | 900 |
| Pression de maintien (10⁵ Pa) | | 500 | 500 |
| Temps de maintien (s) | | 7 | 7 |
| Temps de refroidissement (s) | | 15 | 15 |

| **Propriétés** | | **I5** | **I6** |
|---|---|---|---|
| Tg (DMA) (° C) | | 63 | 63 |
| Tan delta à 20° C et à 1 Hz | | 0,049 | 0,055 |
| **Module d'Young à 23° C (GPa)** | | 5866 | 5435 |
| Ecart-type | | 123 | 300 |
| **Module d'Young à 60° C (GPa)** | | 3263 | 3044 |
| Ecart-type | | 349 | 219 |

Comme visible à la figure 6, l'utilisation, dans la matrice de polypropylène renforcée par une charge fibreuse et additionnée d'un plastifiant selon l'invention (résine alicyclique Regalite R1090), de 5 % en poids d'une charge non fibreuse de type inorganique lamellaire (e.g. craie), confère à la composition I6 des propriétés d'amortissement améliorées au-dessus de 20° C et une tenue mécanique globalement conservée, par rapport à la composition I5 uniquement renforcée par cette charge fibreuse.

### Formulations des compositions C8-C10 et I7-I13 et ingrédients utilisés

Le tableau 6 ci-après indique les formulations (fractions massiques des ingrédients dans chaque composition en %), paramètres d'extrusion, d'injection et les propriétés des compositions C8 et I7-I9.

**[Tableau 6]**

| **Ingrédients** | | **C8** | **I7** | **I8** | **I9** |
|---|---|---|---|---|---|
| PPh recyclé (70% PCR) | rPP1002 INEOS | 85 | 68 | 68 | 68 |
| Plastifiant polypropylène amorphe (Tg < 0° C) | Regalflex P1023 | 0 | 15 | 0 | 0 |
| Copolymère PP-PE | Aerafin 35 | 0 | 0 | 15 | 0 |
| Tg = -40°C | | | | | |
| Modificateur d'impact PP-PE | Hecoelast 708 PO | 0 | 0 | 0 | 15 |
| **Plastifiant** alicyclique (Tg > 20° C) | Regalite R1090 | 0 | 2 | 2 | 2 |
| Fibres de carbone | Teijin Tenax-A HT P802 | 15 | 15 | 15 | 15 |

| **Paramètres d'extrusion** | | **C8** | **I7** | **I8** | **I9** |
|---|---|---|---|---|---|
| Température matière en sortie (°C) | | 205 | 207 | 206 | 206 |
| Puissance (%) | | 70 | 33 | 33 | 60 |
| Vitesse de la vis (tours/min) | | 150 | 150 | 150 | 150 |
| Débit total (kg/h) | | 15 | 10 | 10 | 15 |
| Nombre de trous dans la filière | | 3 | 3 | 3 | 3 |
| Pression de sortie (10⁵ Pa) | | 45 | 28 | 26 | 42 |

| **Paramètres d'injection** | | **C8** | **I7** | **I8** | **I9** |
|---|---|---|---|---|---|
| Température moule (°C) | | 60 | 60 | 60 | 60 |
| Pression d'injection commutation (bar) | | 780 | 630 | 620 | 740 |
| Pression de maintien (bar) | | 500 | 400 | 400 | 450 |
| Temps de maintien (s) | | 7 | 7 | 7 | 7 |
| Temps de refroidissement (s) | | 15 | 15 | 15 | 15 |

| **Propriétés** | | **C8** | **I7** | **I8** | **I9** |
|---|---|---|---|---|---|
| Tg (pic Tanδ DMA 1Hz) (°C) | | 11 | 9 | 9 | 10 |
| tan(delta) 20°C 1Hz | | 0,042 | 0,051 | 0,051 | 0,056 |
| Module de Young à 23°C (GPa) | | 7281 | 6008 | 5724 | 6008 |
| écart-type | | 127 | 228 | 220 | 124 |
| Module de Young à 60°C (GPa) | | 4590 | 3341 | 3079 | 3429 |
| écart-type | | 309 | 204 | 115 | 148 |

Comme visible au tableau 6 et à la figure 7, l'ajout, à la matrice de polypropylène, renforcée par des fibres de carbone, d'un système plastifiant selon l'invention, confère aux compositions I7-I9 des propriétés d'amortissement améliorées, par rapport à la composition C8.

Les propriétés d'amortissement (tan delta) de la composition I9 ont été mesurées, à 20°C et à 40°C, en faisant varier la fréquence en Hz (notamment de 1 à 3000 Hz). Comme visible aux tableaux 7 et 8 ci-dessous, et aux figures 8 et 9, les propriétés d'amortissement (entre 1 et 3000 Hz) de la composition selon l'invention sont > 4,00 % à 20° C et > 4,50 % à 40°C.

**[Tableau 7]**

| **Propriétés** | **I9** |
|---|---|
| tan(delta) 20°C 1 Hz | 0,052 |
| tan(delta) 20°C 200 Hz | 0,046 |
| tan(delta) 20°C 3000 Hz | 0,041 |
| Mean tan(delta) 20°C 1-3000 Hz | 0,05 |

**[Tableau 8]**

| **Propriétés** | **I9** |
|---|---|
| tan(delta) 40°C 1 Hz | 0,066 |
| tan(delta) 40°C 200 Hz | 0,052 |
| tan(delta) 40°C 3000 Hz | 0,052 |
| Mean tan(delta) 40°C 1-3000 Hz | 0,055 |

Le tableau 9 ci-après indique les formulations (fractions massiques des ingrédients dans chaque composition en %), paramètres d'extrusion, d'injection et les propriétés des compositions C9-C10 et 110-111.

**[Tableau 9]**

| **Ingrédients** | | **C9** | **C10** | **I10** | **I11** |
|---|---|---|---|---|---|
| PPh recyclé (70% PCR) | rPP1002 INEOS | 90 | 80 | 79 | 69 |
| Copolymère PP-PE-PB1 | Vestoplast 891 | 0 | 0 | 10 | 10 |
| Tg = -33°C | | | | | |
| Plastifiant alicyclique (Tg > 20° C) | Regalite R1090 | 0 | 0 | 1 | 1 |
| Fibres de carbone | Teijin Tenax-A HT P802 | 10 | 20 | 10 | 20 |

| **Paramètres d'extrusion** | | **C9** | **C10** | **I10** | **I11** |
|---|---|---|---|---|---|
| Température matière en sortie (°C) | | 191 | 190 | 193 | 192 |
| Puissance (%) | | 70 à 78 | 72 à 81 | 48 à 52 | 52 à 56 |
| Vitesse de la vis (tours/min) | | 150 | 150 | 150 | 150 |
| Débit total (kg/h) | | 15 | 15 | 15 | 15 |
| Nombre de trous dans la filière | | 3 | 3 | 3 | 3 |
| Pression de sortie (10⁵ Pa) | | 47 | 53 | 42 | 47 |

| **Paramètres d'injection** | | **C9** | **C10** | **I10** | **I11** |
|---|---|---|---|---|---|
| Température moule (°C) | | 60 | 60 | 60 | 60 |
| Pression d'injection commutation (bar) | | 740 | 885 | 685 | 780 |
| Pression de maintien (bar) | | 500 | 500 | 500 | 500 |
| Temps de maintien (s) | | 7 | 7 | 7 | 7 |
| Temps de refroidissement (s) | | 15 | 15 | 15 | 15 |

| **Propriétés** | | **C9** | **C10** | **I10** | **I11** |
|---|---|---|---|---|---|
| Tg (pic Tanδ DMA 1Hz) (°C) | | 8 | 10 | 8 | 10 |
| tan(delta) 20°C 1Hz | | 0,042 | 0,039 | 0,051 | 0,048 |
| Module de Young à 23°C (GPa) | | 6001 | 9722 | 5155 | 8411 |
| écart-type | | 160 | 432 | 162 | 291 |
| Module de Young à 60°C (GPa) | | 3186 | 5387 | 2389 | 3929 |
| écart-type | | 165 | 112 | 21 | 71 |

Comme visible au tableau 9 et à la figure 10, l'ajout, à la matrice de polypropylène, renforcée par des fibres de carbone, d'un système plastifiant selon l'invention, confère aux compositions I10-I11 des propriétés d'amortissement améliorées, par rapport aux compositions C9-C10.

Le tableau 10 ci-après indique les formulations (fractions massiques des ingrédients dans chaque composition en %), paramètres d'extrusion, d'injection et les propriétés des compositions C9-C10 et 112-113.

**[Tableau 10]**

| **Ingrédients** | | **C9** | **C10** | **I12** | **I13** |
|---|---|---|---|---|---|
| PPh recyclé (70% PCR) | rPP1002 INEOS | 90 | 80 | 79 | 69 |
| Copolymère EVA Tg = -3°C | Vinavil 5603P | 0 | 0 | 10 | 10 |
| **Plastifiant** alicyclique (Tg > 20° C) | Regalite R1090 | 0 | 0 | 1 | 1 |
| Fibres de carbone | Teijin Tenax-A HT P802 | 10 | 20 | 10 | 20 |

| **Paramètres d'extrusion** | | **C9** | **C10** | **I12** | **I13** |
|---|---|---|---|---|---|
| Température matière en sortie (°C) | | 191 | 190 | 193 | 192 |
| Puissance (%) | | 70 à 78 | 72 à 81 | 61 à 67 | 58 à 61 |
| Vitesse de la vis (tours/min) | | 150 | 150 | 150 | 150 |
| Débit total (kg/h) | | 15 | 15 | 15 | 15 |
| Nombre de trous dans la filière | | 3 | 3 | 3 | 3 |
| Pression de sortie (10⁵ Pa) | | 47 | 53 | 44 | 47 |

| **Paramètres d'injection** | | **C9** | **C10** | **I12** | **I13** |
|---|---|---|---|---|---|
| Température moule (°C) | | 60 | 60 | 60 | 60 |
| Pression d'injection commutation (bar) | | 740 | 885 | 720 | 760 |
| Pression de maintien (bar) | | 500 | 500 | 500 | 500 |
| Temps de maintien (s) | | 7 | 7 | 7 | 7 |
| Temps de refroidissement (s) | | 15 | 15 | 15 | 15 |

| **Propriétés** | | **C9** | **C10** | **I12** | **I13** |
|---|---|---|---|---|---|
| Tg (pic Tanδ DMA 1Hz) (°C) | | 8 | 10 | 10 | 10 |
| tan(delta) 20°C 1Hz | | 0,042 | 0,039 | 0,061 | 0,062 |
| Module de Young à 23°C (GPa) | | 6001 | 9722 | 4599 | 6170 |
| écart-type | | 160 | 432 | 91 | 241 |
| Module de Young à 60°C (GPa) | | 3186 | 5387 | 1918 | 2109 |
| écart-type | | 165 | 112 | 68 | 64 |

Comme visible au tableau 10 et à la figure 11, l'ajout, à la matrice à base de polypropylène et de copolymère éthylène-acétate de vinyle, renforcée par des fibres de carbone, d'un système plastifiant selon l'invention, confère aux compositions I12-I13 des propriétés d'amortissement améliorées, par rapport aux compositions C9-C10.

## Revendications

1. Composition polymérique thermoplastique (I1-I13) apte à amortir des vibrations à des fréquences de 1 à 3000 Hz et à des températures moyennes de 10 à 50° C, dans laquelle la composition comprend, en fractions massiques:
50-91 % d'une matrice polymérique non élastomère, la matrice étant à base d'au moins un polymère du propylène choisi parmi les homopolymères et copolymères du propylène,
8-45 % d'une charge renforçante comprenant une charge fibreuse, et
1-18 % d'un système plastifiant comprenant au moins une résine hydrocarbonée qui est aliphatique ou alicyclique et présente une température de transition vitreuse Tg inclusivement comprise entre 25 et 50° C, de préférence une résine hydrogénée alicyclique à température de transition vitreuse Tg de 30-45° C et de masse moléculaire moyenne en nombre Mn de 480-600 g/mol.

2. Composition polymérique thermoplastique selon la revendication 2, dans laquelle le système plastifiant comprend en outre, en fraction massique dans la composition :
3-17 % d'au moins une autre résine hydrocarbonée aliphatique ou alicyclique présentant une température de transition vitreuse Tg inférieure ou égale à 0° C, de préférence comprenant au moins une polyoléfine amorphe de type aliphatique ou alicyclique présentant une température de transition vitreuse Tg inclusivement comprise entre -45 et -10° C et une viscosité Brookfield à l'état fondu à 190° C inclusivement comprise entre 1,0 et 4,0 Pa.s, mesurée selon la norme ASTM D 3236, ladite au moins une autre résine hydrocarbonée étant par exemple
un homopolymère amorphe du propylène ou un copolymère amorphe éthylène-propylène, ou
un mélange amorphe de polyoléfines aliphatiques, par exemple d'un homopolymère amorphe du propylène et d'un copolymère amorphe éthylène-propylène.

3. Composition polymérique thermoplastique selon la revendication 1, dans laquelle le système plastifiant comprend en outre, en fraction massique dans la composition :
3-13 % d'au moins une autre résine hydrocarbonée aromatique présentant une température de transition vitreuse Tg inclusivement comprise entre 30 et 45° C, de préférence une polyoléfine aromatique choisie parmi les homopolymères et copolymères du styrène.

4. Composition polymérique thermoplastique (11-113) selon une des revendications précédentes, dans laquelle la charge renforçante comprend, en fractions massiques dans la composition :
8-40 % de ladite charge fibreuse, de préférence choisie parmi des fibres de verre ou de carbone discontinues,
0-13 % d'une charge inorganique non fibreuse de type lamellaire, par exemple choisie parmi les phyllosilicates et les talcs, et
0-12 % d'une charge inorganique non fibreuse et non lamellaire, par exemple choisie parmi les carbonates de calcium.

5. Composition polymérique thermoplastique (I1-I13) selon la revendication 4, dans laquelle la charge renforçante est constituée, en fractions massiques dans la composition :
de 10-35 % de fibres de verre ou de carbone, et
de 0-15 % de talc et/ou de craie.

6. Composition polymérique thermoplastique (11-113) selon une des revendications précédentes, dans laquelle la composition comprend, en fractions massiques :
55-90 % de ladite matrice, qui comprend ledit au moins un polymère du propylène selon une fraction massique dans la matrice de 75-100 %,
10-40 % de ladite charge renforçante, laquelle comprend ladite charge fibreuse selon une fraction massique dans la charge renforçante de 75-100 %, et
1-18 % dudit système plastifiant, lequel comprend ladite au moins une résine hydrocarbonée aliphatique ou alicyclique selon une fraction massique dans le système plastifiant de 40-100 %.

7. Composition polymérique thermoplastique (11-113) selon une des revendications précédentes, dans laquelle la composition présente, à 60° C après un conditionnement humide dans de l'air à 50 % d'humidité relative, un module d'Young mesuré selon la norme ISO 527 qui est supérieur à 2,5 GPa et de préférence supérieur à 3,5 GPa.

8. Composition polymérique thermoplastique (11-113) selon une des revendications précédentes, dans laquelle ledit au moins un polymère du propylène est compris dans ladite matrice selon une fraction massique dans la matrice de 75-100 %, et est:
- un homopolymère vierge du propylène choisi parmi les polypropylènes isotactiques,
- un interpolymère vierge du propylène et d'une alpha-oléfine autre que le propylène, ou
- un homopolymère ou copolymère recyclé du propylène issu d'un matériau polyoléfinique recyclé de type post-industriel (PIR) ou post-consommation (PCR).

9. Composition polymérique thermoplastique (I1-I13) selon la revendication 8, dans laquelle ladite matrice est constituée dudit au moins un polymère du propylène, étant de préférence constituée dudit homopolymère vierge du propylène ou dudit homopolymère ou copolymère recyclé du propylène.

10. Composition polymérique thermoplastique selon la revendication 8, dans laquelle ladite matrice comprend au moins un autre polymère thermoplastique non issu du propylène selon une fraction massique dans la matrice de 5-40 %, qui est choisi parmi :
- les polymères d'acétate de vinyle optionnellement couplés à un agent compatibilisant,
- les poly(téréphtalate de butylène) couplés à un agent compatibilisant, et
- les polyamides aliphatiques, de préférence choisis parmi les PA 6, PA 11 et PA 12, couplés à un agent compatibilisant,
l'agent compatibilisant comprenant par exemple un polypropylène greffé anhydride maléique.

11. Composition polymérique thermoplastique selon la revendication 10, dans laquelle ladite matrice est dépourvue de polyphtalamide.

12. Dispositif à fonction dynamique pour véhicule à moteur automobile, aérien ou spatial, le dispositif étant apte à amortir des vibrations dans une plage de fréquences de 1 à 3000 Hz et à des températures moyennes de 10 à 50° C vues par le dispositif au sein du véhicule, dans lequel le dispositif comprend une composition (11-113) selon une des revendications précédentes qui est moulée par injection et qui est optionnellement solidaire d'un insert métallique, par exemple fileté.

13. Dispositif selon la revendication 12, ledit véhicule à moteur étant un véhicule automobile à moteur électrique, dans lequel le dispositif est choisi parmi :
les pièces structurelles transmettant des vibrations, par exemple des roues du véhicule, et
les supports antivibratoires réunissant des premier et deuxième éléments rigides en amortissant des vibrations entre eux et en supportant une charge, le support antivibratoire étant de préférence un support de liaison reliant le moteur électrique à un élément de la structure du véhicule automobile, tel que la caisse du véhicule.

14. Dispositif selon la revendication 13, dans lequel le dispositif est choisi parmi des étriers, des supports de moteur et des supports de compresseurs de climatisation pour le véhicule automobile à moteur électrique.
